# EUROPEAN PATENT APPLICATION

(11) **EP 1 221 714 A1**
(43) Date of publication of application: **10.07.2002**
(21) Application number: 02075993.2
(22) Date of filing: 20.12.2001
(51) Int. Cl.: H01J 65/04

(54) **Electrodeless low-pressure discharge lamp having ultraviolet reflecting layer**

(30) Priority: 28.12.2000 US 752018
(62) Divisional of application: 01310687.7
(71) Applicant: GENERAL ELECTRIC COMPANY, Schenectady, NY 12345 (US)
(72) Inventor: Bader, Attila, Vasvero u. 50 (HU); Sajo, Gabor, Julianus barat u. 25 (HU); Mieskoski, James D., Seven Hills, Ohio 44131 (US)
(74) Representative: Pedder, James Cuthbert

(57) **Abstract**

An electrodeless low-pressure discharge lamp (10) which comprises a discharge vessel (12), a means for exciting discharge, an UV-to-visible-converting layer (32) and an UV reflecting layer (34). The discharge vessel (12) encloses a gas-tight discharge cavity (14) containing an ionizable fill. The discharge vessel (12) has a light-transmitting bulb portion (16) and a reentrant tube (18) protruding into the discharge cavity (14), and the bulb portion (16) and the reentrant tube (18) each exhibits a surface (21, 20) facing to the discharge cavity (14). The means for exciting discharge is arranged at least partially in the reentrant tube (18). The UV-to-visible-converting layer (32) is applied only to said surface (21) of the bulb portion (16), while the UV reflecting layer (34) is applied to said surface (20) of the reentrant tube (18).

## Description

This invention relates to an electrodeless low-pressure discharge lamp having ultraviolet (UV) reflecting layer and filled with mercury and an inert gas as discharge medium. This type of lamp is also known as electrodeless compact fluorescent lamp in literature.

In electrodeless compact fluorescent lamps, a discharge is established in an ionizable medium filled into a discharge vessel via radio-frequency (RF) electromagnetic field generated by a coil arranged in a so-called reentrant tube of the discharge vessel and connected to a supply electonics. The ionizable medium generally consists of low-pressure mercury vapor and an inert gas, e.g. a noble gas. The electric field component of the coil-generated RF field initiates ionization of the mercury vapor, while the magnetic field component thereof maintains the ionization so as to emit UV photons of a dominant wavelength of 253.7 nm. This UV radiation will then excite UV-to-visible-converting compounds distributed in coating layers applied to an inner surface of the discharge vessel. As a result of the conversion, a light in the visible spectral range suitable for illumination is emitted. The UV-to-visible-converting materials are usually phosphor compounds activated by various rare earth elements.

The UV-to-visible conversion of light is accompanied by considerable amount of heat generation due to which high temperature develops within the discharge vessel. A major part of the generated heat is dissipated through the tubular reentrant portion of the discharge vessel containing the exciting coil. This induces high temperatures of 200 to 230 °C within the reentrant tube. High temperatures in the reentrant tube accelerate deterioration of the wire insulation and the bobbin material of the coil. Furthermore, higher coil temperatures require the use of more expensive materials, and cost-effective materials are not available for high power electrodeless compact fluorescent lamps of known structure at present.

More specifically, U.S. Patent No. 4,119,889 discloses an electrodeless low-pressure discharge lamp in which the reentrant tube on its surface facing to the discharge space is coated with an electrically insulating UV and visible light reflecting layer consisting of magnesium oxide or zirconium oxide and covered by an additional phosphor coating basically for increasing luminous efficacy of the lamp. A disadvantage of this lamp is that the heat generated during the UV-to-visible conversion taking place in said phosphor coating is primarily absorbed by the reentrant tube which leads to very high temperatures inside the reentrant tube at high loads.

For decreasing this heat load on the reentrant tube, U.S. Patent No. 5,696,426 discloses an electrodeless low-pressure discharge lamp in which two coating layers of different UV-to-visible conversion efficiencies are arranged on the inner surface of the discharge vessel. As the conversion efficiency of the coating layer on the reentrant tube is relatively high compared with that of the coating layer on the bulb portion, less heat is generated in the former which leads to lower heat load on the reentrant tube and hence to lower temperatures inside it. By applying a suitable reflecting layer on the surface of the reentrant tube under the UV-to-visible-converting coating layer, the amount of heat absorbed by the reentrant tube is further reduced. However, the luminescent coating of the reentrant tube is preferably cerium-magnesium aluminate activated by trivalent terbium that is costly to be prepared and, what is more disadvantageous, changes the color of the lamp.

The use of metal oxide layers or layers containing metallic particles as protective or reflecting coatings in electrodeless compact fluorescent lamps is also known. U.S. Patent No. 5,726,528 introduces a fluorescent reflector lamp with a reflecting layer and an UV-to-visible-converting layer. On the one hand, the reflecting layer contains a blend of gamma alumina particles and alpha alumina particles in given ratios, and on the other hand this reflecting layer is covered by an UV-to-visible-converting layer. The purpose with the reflecting layer in this lamp is to reflect UV photons back into the UV-to-visible-converting layer and to direct visible light back into the lamp from which this visible light exits in the desired direction. However, the patent specification in consideration contains no indication relating to the use of the reflecting layer as a medium for decreasing the amount of heat absorbed by the reentrant tube and hence for lowering the temperature within it.

From U.S. Patent No. 6,051,922, an electrodeless low-pressure mercury vapor discharge lamp can be known in which at least a portion of the luminescent (i.e. the UV-to-visible-converting) layer applied to the inner surface of the discharge vessel bears a protective layer of aluminum oxide particles with a coating weight of 0.01 to 0.5 mg/cm² at the highest. However, the purpose of applying the protective layer is to minimize the drift in color point during lamp life and to reduce mercury consumption during use, but not to protect the exciting coil situated in the reentrant tube from high temperatures.

All the above mentioned prior art electrodeless compact fluorescent lamps are provided with an UV-to-visible-converting layer on the reentrant tube that, however, does not result in remarkable decrease of heat load exerted on the reentrant tube.

Thus there is a particular need for an electrodeless compact fluorescent lamp in which a decrease of temperature within the reentrant tube of the discharge vessel is accomplished. Lower temperatures increase the reliability of the electronics and the lifetime of the bobbin material of the exciting coil. Furthermore, they allow the lamp to be operated at a higher power which results in greater luminous output.

In an exemplary embodiment of the invention, an electrodeless low-pressure discharge lamp comprises a discharge vessel, a means for exciting discharge, an UV-to-visible-converting layer and an UV reflecting layer. The discharge vessel encloses a gas-tight discharge cavity containing an ionizable fill. The discharge vessel has a light-transmitting bulb portion and a reentrant tube protruding into the discharge cavity, and the bulb portion and the reentrant tube each exhibits a surface facing to the discharge cavity. The means for exciting discharge is arranged at least partially in the reentrant tube. The UV-to-visible-converting layer is applied only to said surface of the bulb portion, while the UV reflecting layer is applied to said surface of the reentrant tube.

This structure has the advantage over the prior art that a lower heat load is exerted on the reentrant tube which results in lower temperatures therein. These lower temperatures increase the reliability and lifetime of the materials used in the means arranged at least partially in the reentrant tube for exciting discharge in the lamp. Furthermore, it is also implied that at the same reentrant tube temperature as the reentrant tube temperature of prior art lamps, definitely more light can be obtained with the lamp structure proposed.

The invention will now be described in greater detail, by way of example, with reference to the drawings, the single figure of which shows an electrodeless low-pressure discharge lamp, in which the present invention is embodied, partly in elevation and partly in longitudinal sectional view.

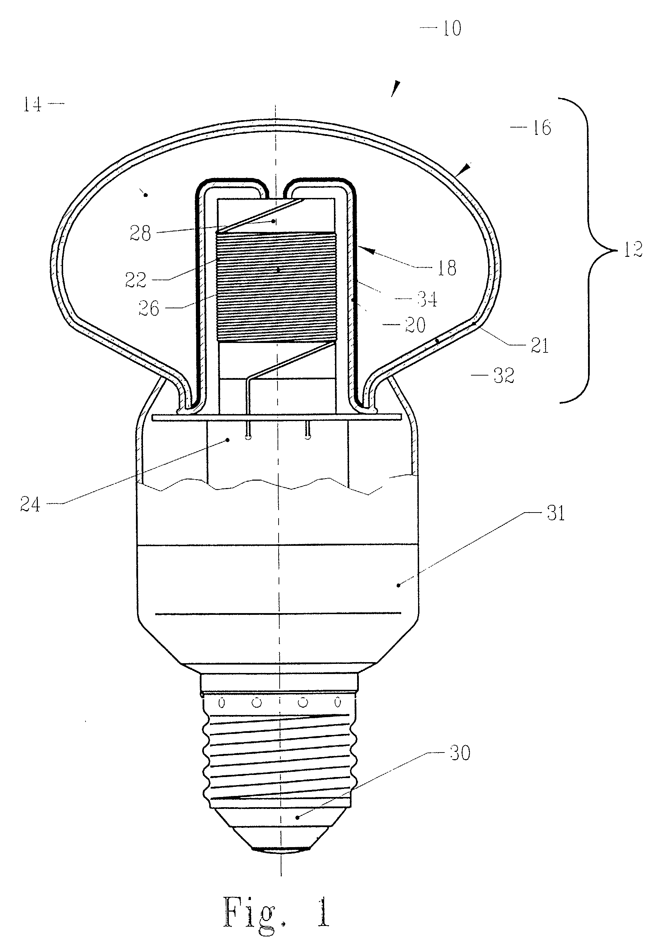

Referring now to Fig. 1, an electrodeless low-pressure discharge lamp 10 has a discharge vessel 12 enclosing a discharge cavity 14 in a gas-tight manner. The discharge vessel 12 is assembled of a light-transmitting bulb portion 16 and a cylindrical reentrant tube 18. The shape of the bulb portion 16 can be selected arbitrarily, it is preferably ellipsoidal. The bulb portion 16 and the reentrant tube 18 each has surfaces 21 and 20, respectively facing to the discharge cavity 14. The discharge cavity 14 has an ionizable fill which is preferably a mixture of low-pressure mercury vapor and an inert gas, preferably a noble gas, such as krypton. The pressure of the krypton gas is preferably 0.5 mbar and the low-pressure mercury vapor is provided by an BilnHg amalgam (not shown).

A means for providing discharge in the ionizable fill is accommodated at least partially in the reentrant tube 18. Said means comprises a supply electronics 24 (shown as a block) surrounded by a housing 31 and connected to a coil 22. The coil 22 in this embodiment is preferably a radiu-frequency coil, windings 26 of which are arranged on a suitable bobbin material 28. The supply electronics 24 is connected by electrically conducting leads to a screw-type base 30. By means of fitting the latter into an appropriate socket (not shown) connected e.g. to the electric network, said supply electronics 24 can be energized.

The inner surface 21 of the bulb portion 16, i.e. its surface 21 facing to the discharge cavity 14, is coated with an UV-to-visible-converting layer 32, preferably in the form of a tri-phosphor layer comprising red-luminescent yttrium oxide activated by trivalent europium (Y₂O₃:Eu), green-luminescent lanthane phosphate activated by trivalent terbium and cerium (LaPO₄:Tb,Ce) and blue-luminescent barium-magnesium aluminate activated by bivalent europium (BaMgAl₁₂O₂₀:Eu) Alternatively, said UV-to-visible-converting layer 32 can be further provided with a protective layer of a metal oxide for reducing mercury consumption during operation.

In the prior art electrodeless compact fluorescent lamps, the surface of the reentrant tube facing to the discharge cavity is generally coated by rutile titan oxide (TiO₂) and then by various UV-to-visible-converting phosphor layers generating reasonable amount of heat during operation. In low-pressure mercury discharge, UV photons with a wave length of 253.7 nanometer are emitted with high intensity in all directions in the discharge vessel. These photons are converted to visible light by the UV-to-visible-converting layer applied to the inner surface of the discharge vessel. The energy difference between an UV photon and a visible photon is dissipated as heat. It was found experimentally that the amount of heat dissipated in the reentrant tube of a prior art electrodeless fluorescent lamp amounts to approximately 20% of the total input power.

Now referring again to Fig. 1, the reentrant tube 18 of the electrodeless low-pressure discharge lamp 10, in which the present invention is embodied, has a coating of a single UV reflecting layer 34, preferably of aluminum oxide (Al₂O₃). The coating weight is selected to be preferably 4.5 mg/cm², and no UV-to-visible-converting material is applied to the surface of the reentrant tube 18. Generally, the coating weight is selected so that the reflection coefficient of said UV reflecting layer 34 reaches a value of at least 0.7. Since no UV-to-visible-converting material is applied to the reentrant tube 18 in this lamp structure, UV-to-visible conversion takes place only along the surface 21 of the bulb portion 16. Thus, the energy loss due to UV-to-visible conversion is dissipated in the bulb portion 16 of the discharge vessel 12 rather than in the wall of the reentrant tube 18.

As it was mentioned earlier, the reflection coefficient of the Al₂O₃ layer applied to the inner surface 20 of the reentrant tube 18 has to reach the value of at least 0.7 so that an adequate luminous intensity of the discharge lamp 10 can be obtained. However, in a preferred embodiment of the present invention, the coating weight of 4.5 mg/cm² results in a reflection coefficient higher than 0.9 for the dominant UV line of 253.7 nanometer emitted by the mercury. Therefore, most of the UV photons hitting the reentrant tube 18 are reflected back into the discharge cavity 14. A substantial portion of the reflected UV photons reaches the bulb portion 16 in which they are converted to visible light by the UV-to-visible-converting layer 32.

In further embodiments of the electrodeless compact fluorescent lamp 10 proposed, other UV reflective materials can also be used instead of Al₂O₃. These can be selected from the group consisting of e.g. anatase TiO₂, Y₂O₃, La₂O₃, MgO, SiO₂, aluminum-silicate and CaP₂O₇. When using these alternative compounds as constituents of said UV reflecting layer 34, a coating weight has to be employed that results in a reflection coefficient of 0.7 or higher so that a high reflection rate can be reached at the reentrant tube 18. For a material, there is a definite correlation between the coating weight to be applied and the reflection coefficient to be realized. This correlation can be readily determined e.g. by experiments.

The following Example further illustrates the temperature decrease within the reentrant tube 18 accomplished by the exemplary embodiment of the electrodeless compact fluorescent lamp proposed.

### EXAMPLE

For test purposes, five experimental lamps having a single Al₂O₃ layer with a coating weight of 4.5 mg/cm² on the inner surface of the reentrant tube 18 in accordance with an embodiment of the present invention and five prior art electrodeless lamps having TiO₂ and phosphor layers on the inner surface of the reentrant tube were prepared.

In a first experiment, all the ten lamps were operated by a 23W and a 2.65 MHz electronic ballast, and the temperature of the RF coil and the lumen output were measured in open air and in a conical fixture separately. The temperatures in all cases were recorded after 120 minutes of warming-up. The lumen output of the lamps was measured in a photometry sphere in independent measurements.

In a second experiment, the lamps were operated by an RF generator at 25 W and 30 W, relative lumen [Lm] and the temperature of the coil were measured simultaneously. The average of the measured values are summarized in the following tables.

| **Temperature measurements** | | |
|---|---|---|
| | pure Al₂O₃ layer (embodiment of the present invention) | TiO₂ + phosphor layer (prior art) |
| T_{coil} in °C's, at 21 W* with lamp in open air | 163 | 183 |
| T_{coil} in °C's, at 21 W* with lamp in fixture | 181 | 215 |
| T_{coil} in °C's, at 25 W | 187 | 212 |
| T_{coil} in °C's, at 30 W | 210 | 237 |

| **Lumen [Lm] measurements** | | |
|---|---|---|
| | pure Al₂O₃ layer (embodiment of the present invention) | TiO₂ + phosphorous layer (prior art) |
| Lumen at 21 W* | 1220 | 1361 |
| | | |
| Relative Lm at 25 W | 1348 | 1495 |
| Relative Lm at 30 W | 1595 | 1695 |

| | | |
|---|---|---|
| *measured with 23 W electronics, 10% ballast loss is subtracted | | |

The above experimental results clearly indicate that the temperature inside the reentrant tube of the lamp according to an embodiment of the present invention is 20 to 35 °C lower than the temperature inside the reentrant tube of the prior art lamp at the same input power. Furthermore, the lumen output of the lamps according to an embodiment of the present invention is about 10% lower than the lumen output of the prior art lamps. This means that at the same reentrant tube temperature, 10% more light can be obtained by the lamp in which the present invention is embodied.

## Claims

1. An electrodeless low-pressure discharge lamp comprising
a discharge vessel enclosing a gas-tight discharge cavity containing an ionizable fill, the discharge vessel having a light-transmitting bulb portion and a reentrant tube protruding into the discharge cavity, the bulb portion and the reentrant tube each having a surface facing to the discharge cavity;
a means arranged at least partially in the reentrant tube for exciting discharge in the ionizable fill;
an UV-to-visible-converting layer applied only to said surface of the bulb portion; and
an UV reflecting layer applied to said surface of the reentrant tube.

2. The electrodeless low-pressure discharge lamp of claim 1 in which the means for exciting discharge in the ionizable fill comprises a supply electronics surrounded by a housing and connected to a coil.

3. The electrodeless low-pressure discharge lamp of claim 1 in which the UV-to-visible-converting layer comprises at least one phosphor layer activated by at least one rare earth element.

4. The electrodeless low-pressure discharge lamp of claim 1 in which the UV reflecting layer is made of one of the compounds belonging to the group of Al₂O₃, anatase TiO₂, Y₂O₃, La₂O₃, MgO, SiO₂, aluminum-silicate and CaP₂O₇.

5. The electrodeless low-pressure discharge lamp of claim 1 in which the UV reflecting layer has a coating weight resulting in a reflection coefficient of at least 0.7.

6. The electrodeless low-pressure discharge lamp of claim 5 in which the UV reflecting layer has a coating weight resulting in a reflection coefficient of at least 0.9.

7. The electrodeless low-pressure discharge lamp of claim 1 in which the ionizable fill comprises mercury and an inert gas, the UV-to-visible-converting layer is a tri-phosphor layer and the UV reflecting layer is of aluminum oxide with a coating weight of 4.5 mg/cm².
